# EUROPÄISCHE PATENTSCHRIFT

(11) **EP 3 979 081 B1**
(45) Veröffentlichungstag und Bekanntmachung des Hinweises auf die Patenterteilung: **07.06.2023**
(21) Anmeldenummer: 20199353.2
(22) Anmeldetag: 30.09.2020
(51) Int. Cl.: G06F 11/36, G06F 11/34

(54) **VERFAHREN ZUM TESTEN EINER MICROSERVICE-ANWENDUNG**
METHOD FOR TESTING A MICROSERVICE APPLICATION
PROCÉDÉ D'ESSAI D'UNE APPLICATION MICRO SERVICE

(43) Veröffentlichungstag der Anmeldung: 06.04.2022
(73) Patentinhaber: Siemens Aktiengesellschaft, 80333 München (DE)
(72) Erfinder: Metzker, Martin, 85586 Poing (DE); Pönitsch, Michael, 82049 Pullach i. Isartal (DE)
(74) Vertreter: Siemens Patent Attorneys

(56) Entgegenhaltungen:
- US-A1- 2015 128 103
- US-A1- 2017 242 784
- US-A1- 2019 102 238

## Beschreibung

Die Erfindung betrifft ein Verfahren zum Testen einer Microservice-Anwendung.

Die im Bereich der Software-Architekturen aktuell dominierenden Microservices basieren darauf, sehr flexibel über wohldefinierte Anwendungsprogrammierschnittstellen API miteinander kommunizieren und Daten austauschen zu können. Die korrekte Spezifikation, Dokumentation und Implementierung dieser APIs und ihrer sog. Endpunkte ist dabei Hauptbestandteil der Microservice-Entwicklung.

Aufgrund der zunehmenden Anzahl und stark verkürzten Release-Zeiträumen von Microservices wird aber vor allem die bisher recht zeitaufwendige Prüfung der Performance - und Skalierungseigenschaften dieser API-Endpunkte oft vernachlässigt.

Die vorgelegte Erfindung zeigt einen Weg auf, hier sehr effektiv und schnell zu einer zuverlässigen Lösung zu kommen, die vollautomatisiert alle wesentlichen Aspekte einer Perfomance- und Skalierungs-Verifikation für den betrachteten Microservice abdeckt.

Bisherige Ansätze zur Verifikation von Performance- und Skalierungseigenschaften von Microservices beinhalten in der Regel eine spezifische Auswahl von Tests. Die Tests werden aus nichtfunktionalen Anforderungen abgeleitet, die wiederum im Rahmen des etablierten Software-Engineering Prozesses formuliert wurden. Die Tests sind dementsprechend ein Produkt eines top-down Entwicklungsansatzes und ihre Auswahl eine wiederkehrende Aktivität des Softwareengineerings.

Aus der Druckschrift US 2015/128103 A1 sind ein System und ein Verfahren zum Bereitstellen einer Anwendungsprogrammierschnittstelle (API) bekannt.

Die Aufgabe der vorliegenden Erfindung ist es, ein verbessertes Verfahren zum Testen von Microservice-Anwendungen bereitzustellen.

Diese Aufgabe wird durch das Verfahren des unabhängigen Anspruchs 1 gelöst. Weiterbildungen sind in den abhängigen Patentansprüchen angegeben.

Nach einem Aspekt der Erfindung wird ein Verfahren zum Testen einer Microservice-Anwendung mit wenigstens einem Microservice mit wenigstens einer Anwendungsprogrammierschnittstelle, umfassend: Auslesen von Kenndaten der Anwendungsprogrammierschnittstelle des Microservices der Microserviceanwendung und Ermitteln wenigstens eines Endpunkts der Anwendungsprogrammierschnittstelle, wobei über den Endpunkt abfragebare Antwortdaten des Microservices definiert sind; Ermitteln einer Mehrzahl von Parametern der Anwendungsprogrammierschnittstelle auf Basis der Kenndaten der Anwendungsprogrammierschnittstelle; Automatisches Generieren eines Ausführungsskripts auf Basis der Kenndaten der Anwendungsprogrammierschnittstelle, wobei das Ausführungsskript wenigstens eine Datenabfrage zum Aufrufen des ermittelten Endpunkts und zum Abfragen abfragbarer Antwortdaten und wenigstens eine Übertragungscharakteristik einer Datenübertragung der Antwortdaten definiert, wobei die Übertragungscharakteristik eine Beurteilung einer Bereitstellung der Antwortdaten vom Microservice als Antwort auf eine entsprechende Datenabfrage ermöglicht, wobei das automatische Generieren des Ausführungsskripts ein Definieren einer Mehrzahl von Datenabfragen für die Mehrzahl von Parametern und/oder für Variationen von Werten der Parameter der Anwendungsprogrammierschnittstelle umfasst; Automatisches Generieren einer Testinfrastruktur, wobei die Testinfrastruktur wenigstens eine Client-Instanz (umfasst, und wobei die Client-Instanz eingerichtet ist, die Datenabfrage des Ausführungsskripts auszuführen und entsprechende Antwortdaten vom Microservice zu empfangen; Ausführen des Ausführungsskripts und Aussenden der Mehrzahl von Datenabfrage des Ausführungsskripts durch die Client-Instanz an die Anwendungsprogrammierschnittstelle des Microservices und Empfangen entsprechender Antwortdaten des Microservices durch die Client-Instanz; und Ermitteln der Übertragungscharakteristik durch die Client-Instanz.

Hierdurch kann der technische Vorteil erreicht werden, dass ein Verfahren zum Testen einer Microservice-Anwendung bereitgestellt werden kann, bei dem ein umfassender Test aller durch die Microservice-Anwendung bereitgestellten Dienste ermöglicht ist. Hierzu werden zunächst Kenndaten der Anwendungsprogrammierschnittstellen der Microservices der Microservice-Anwendung ausgelesen und darauf basierend für jede Anwendungsprogrammierschnittstelle der Microservices der Microservice-Anwendung wenigstens ein Endpunkt ermittelt. Der Endpunkt der Anwendungsprogrammierschnittstelle definiert hierbei die durch den jeweiligen Microservice bereitgestellten und abfragbaren Daten. Hierauf basierend wird wenigstens ein Ausführungsskript automatisch generiert, wobei das Ausführungsskript wenigstens eine Datenabfrage zum Aufrufen eines ermittelten Endpunkts zum Abfragen abfragbarer Antwortdaten und wenigstens eine Übertragungscharakteristik einer Datenübertragung der Antwortdaten definiert. Die Übertragungscharakteristik ermöglicht hierbei eine Beurteilung der Bereitstellung der Antwortdaten durch den Microservice. Die Übertragungscharakteristik kann beispielsweise eine Zeitdauer beschreiben, die zur Übertragung der in der jeweiligen Datenabfrage angeforderten Antwortdaten durch den Microservice benötigt wird. Durch das automatische Generieren des Ausführungsskripts kann die jeweilige Datenabfrage individuell auf die durch die jeweilige Anwendungsprogrammierschnittstelle bereitgestellten Daten des Microservices angepasst werden.

Für eine Microservice-Anwendung mit einer Mehrzahl verschiedenen Microservices, die jeweils über individuelle Anwendungsprogrammierschnittstellen eine Reihe verschiedener Daten bereitstellen, kann somit durch das automatische Generieren eines Ausführungsskripts, indem für alle Microservices und die entsprechenden Anwendungsprogrammierschnittstellen und die hierdurch bereitgestellten und abfragbaren Daten des jeweiligen Microservices entsprechende Datenabfragen definiert werden. Hierdurch kann erreicht werden, dass zum Testen der jeweiligen Microservices durch die entsprechenden Datenabfragen alle zur Verfügung stehenden Daten und damit verbunden alle zur Verfügung stehenden Services getestet werden können. Hierdurch kann somit ein allumfassender Test der Microservice-Anwendung bereitgestellt werden, indem alle zur Verfügung gestellten Services der Microservice-Anwendung durch entsprechende Datenabfragen getestet werden können.

Ferner kann automatisch eine Testinfrastruktur generiert werden, die wenigstens eine Client-Instanz umfasst, die jeweils eingerichtet ist, die Datenabfragen des Ausführungsskripts auszuführen und entsprechende Antwortdaten der Microservices der Microservice-Anwendung zu empfangen. Durch das automatische Generieren kann sichergestellt werden, dass die Testinfrastruktur und insbesondere die Client-Instanzen der Testinfrastruktur optimal eingerichtet sind, sodass sichergestellt werden kann, dass ein Testen der Microservice-Anwendung in den optimalen Rahmenbedingungen durchgeführt werden kann. In Abhängigkeit der jeweiligen Microservices der Microservice-Anwendung können die Client-Instanzen individuell angepasst werden, sodass für jeden Microservice individuell angepasste Client-Instanzen generiert werden, die optimal darauf angepasst sind, über die jeweiligen Anwendungsprogrammierschnittstellen mit dem jeweiligen Microservice zu kommunizieren und entsprechende bereitgestellte Antwortdaten des Microservice zu beziehen und gegebenenfalls auszuwerten.

Durch das automatische Generieren der Testinfrastruktur basierend auf den Kenndaten der jeweiligen Anwendungsprogrammierschnittstellen der Microservices der Microservice-Anwendung kann somit eine optimale Testinfrastruktur bereitgestellt werden. Hierdurch kann erreicht werden, dass die generierte Testinfrastruktur ausschließlich die zum Test der jeweiligen Microservice-Anwendung benötigten Komponenten, insbesondere Client-Instanzen, umfasst. Dies ermöglicht einen minimalen Umfang der Testinfrastruktur, wodurch sowohl Speicherkapazität als auch Rechenkapazität der Datenverarbeitungsanlage eingespart werden kann, auf der der jeweilige Test durchzuführen ist. Darüber hinaus kann über die optimale Anpassung der zu verwendenden Testinfrastruktur die Effizienz des durchzuführenden Tests der Microservice-Anwendung erhöht werden, wodurch sowohl eine Testdauer als auch eine zur Durchführung des Tests benötigte Rechenkapazität verringert werden kann.

Nach automatischem Generieren der Ausführungsskripte und dem automatischen Generieren der Testinfrastruktur können die generierten Ausführungsskripte durch die Client-Instanzen der Testinfrastruktur ausgeführt und entsprechende Datenabfragen an die Microservices der Microservice-Anwendung ausgesendet werden. Die auf die Datenabfragen entsprechend ausgesendeten Antwortdaten der jeweiligen Microservices werden durch Client-Instanzen der Testinfrastruktur empfangen und entsprechende Übertragungscharakteristiken werden ermittelt. Über die Übertragung ermittelten Übertragungscharakteristiken kann eine Beurteilung des jeweiligen Microservices durchgeführt werden. Die Übertragungscharakteristik kann hierbei beispielsweise eine für das Bereitstellen der Antwortdaten durch den jeweiligen Microservice benötigte Zeitdauer bzw. eine Datenmenge der jeweiligen Antwortdaten oder einen Erfolg bzw. Misserfolg der ausgesendeten Datenabfrage umfassen. Hierüber kann eine Performance des jeweiligen Microservices beurteilt werden.

Basierend auf der Beurteilung der Performance des jeweiligen Microservices kann eine Anpassung des jeweiligen Microservices durchgeführt werden, die zu einer Erhöhung der Performance führt. Eine Erhöhung der Performance des Microservices bzw. der Microservice-Anwendung bewirkt dabei, dass zur Bereitstellung der Information des jeweiligen Microservices an einen den jeweiligen Service nutzenden Client eine geringe Anzahl von zu stellenden Datenabfragen benötigt wird. Hierüber kann somit sowohl die benötigte Rechenkapazität der Datenverarbeitungsanlage, auf der die jeweilige Microservice-Anwendung betrieben wird, als auch eine Rechenkapazität der Datenverarbeitungsanlage, auf der der jeweilige Client betrieben wird, reduziert werden, da eine geringere Anzahl von Datenabfragen bearbeitet werden müssen. Das beanspruchte Verfahren zum Testen einer Microservice-Anwendung trägt somit zur Steigerung einer Effizienz der jeweiligen Microservice-Anwendung und damit verbunden zur Reduzierung der jeweiligen Rechenkapazität zum Betrieb der jeweiligen Microservice-Anwendung bei.

Eine Datenabfrage ist im Sinne der Anmeldung eine im Zuge einer Client-Server-Kommunikation von einem Client an den Server ausgesendete Abfrage zum Aussenden einer entsprechenden Antwortnachricht durch den Server an den jeweiligen Client. Eine solche Abfrage kann das Aussenden von Nutzdaten betreffen, wobei in einem solchen Fall entsprechende Antwortdaten gegebenenfalls eine große Datenmenge umfassen können. Alternativ kann eine Datenabfrage in Form einer Serverabfrage lediglich auf das Auslösen eines entsprechenden Dienstes des Servers gerichtet sein und als Antwortnachricht eine Bestätigung des Ausführens des Dienstes durch den Server auslösen. Eine Datenabfrage kann damit im Sinne der Anmeldung allgemeine eine Abfragenachricht eines Clients an einen Server betreffen, in der eine Ausführung eines entsprechenden Dienstes angestrebt wird. Eine entsprechende Antwortnachricht oder Antwortdaten können im Sinne der Erfindung eine als Antwort auf die Datenabfrage durch den Server an den jeweiligen Client gesendete Nachricht sein, in der eine Ausführung des angeforderten Dienstes bestätigt sein kann. Antwortnachrichten oder Antwortdaten können Nutzdaten einer großen Datenmenge oder lediglich kurze Bestätigungsnachrichten des Severs umfassen.

Hierdurch kann der technische Vorteil erreicht werden, dass ein umfassender Test der Microservice-Anwendung bereitgestellt werden kann. Durch das Ermitteln der Mehrzahl von Parametern der Anwendungsprogrammierschnittstellen auf Basis der Kenndaten der Anwendungsprogrammierschnittstellen kann gewährleistet werden, dass für alle bereitgestellten Daten bzw. Dienste der jeweiligen Microservices der Microservice-Anwendung ein entsprechender Test durchgeführt werden kann. Hierzu wird im Ausführungsskript bzw. in den Ausführungsskripten eine Mehrzahl von Datenabfragen definiert, über die jeweils die verschiedenen Parameter abgefragt werden können. Insbesondere kann über die Mehrzahl von Datenabfragen eine Variation der einzelnen Parameter der Anwendungsprogrammierschnittstelle erreicht werden. Durch das Ausführen des Ausführungsskripts bzw. der Ausführungsskripte durch die Client-Instanzen der Testinfrastruktur können somit sämtliche in den Kenndaten der Anwendungsprogrammierschnittstellen bereitgestellten Parameter der einzelnen Microservices abgefragt werden, sodass ein umfassender Test aller möglichen durch die Microservice-Anwendung bereitgestellten Dienste ermöglicht ist. Hierdurch kann erreicht werden, dass eine lückenlose Performancebestimmung der jeweiligen zu testenden Microservice-Anwendung und damit verbunden eine lückenlose Effizienzsteigerung der jeweiligen Microservice-Anwendung ermöglicht ist.

Nach einer Ausführungsform umfasst das Verfahren ferner:
Automatisches Generieren eines Testplans, wobei im Testplan eine Abfolge des Aussendens der Mehrzahl von Datenabfragen des Ausführungsskripts definiert ist; und
Ausführen des Ausführungsskripts und Aussenden der Datenabfragen des Ausführungsskripts durch die Client-Instanz an die Anwendungsprogrammierschnittstelle des Microservices gemäß dem Testplan.

Hierdurch kann der technische Vorteil erreicht werden, dass eine effiziente Abfolge des Tests der zu testenden Microservice-Anwendung ermöglicht ist. Durch das automatische Generieren eines Testplans, in dem eine Abfolge des Aussendens der Mehrzahl von Datenabfragen des Ausführungsskripts definiert ist, kann eine möglichst zeiteffiziente und damit verbundene ressourceneffiziente Ausführung des Tests der Microservice-Anwendung bereitgestellt werden. Der Testplan kann hierbei vorsehen, das jeweilige Aussenden der Mehrzahl von Datenabfragen und damit verbunden das Ausführen des Tests der zu testenden Microservice-Anwendung möglichst ressourcen- und zeiteffizient zu gestalten, sodass der Test möglichst schnell und mit geringer benötigter Rechenkapazität der Datenverarbeitungsanlage, auf der der Test der zu testenden Microservice-Anwendung durchgeführt wird, ausführbar ist.

Nach einer Ausführungsform ist im Testplan ferner eine Ausführungsdauer und/oder eine Anzahl von Ausführungswiederholungen und/oder eine Ausführungskomplexität und/oder eine Ausführungsparallelität und/oder eine Ausführungsentfernung der Datenabfragen definiert, wobei eine Ausführungsdauer eine Zeitdauer einer Datenabfrage beschreibt, wobei eine Anzahl von Ausführungswiederholungen eine Anzahl aufeinander folgender Ausführungen einer Datenabfrage beschreibt, wobei eine Ausführungskomplexität eine Komplexität der durch die Datenabfrage abzufragenden Parameter der Anwendungsprogrammierschnittstelle beschreibt, wobei eine Ausführungsparallelität eine Anzahl von parallel durch verschiedene Client-Instanzen auszuführenden Datenabfragen beschreibt, und wobei eine Ausführungsentfernung eine räumliche Entfernung zwischen der Anwendungsprogrammierschnittstelle und der Client-Instanzen beschreibt.

Hierdurch kann der technische Vorteil erreicht werden, dass ein möglichst umfassender Test der zu testenden Microservice-Anwendung bereitgestellt werden kann. Der Testplan sieht hierbei vor, eine Ausführungsdauer bzw. eine Anzahl von Ausführungswiederholungen bzw. eine Ausführungskomplexität oder eine Ausführungsparallelität bzw. eine Ausführungsentfernung der Datenabfragen zu variieren und hierüber eine Performance des jeweiligen Microservices bzw. der Microservice-Anwendung zu bestimmen. Hierzu werden für Datenabfragen unterschiedlicher Ausführungsdauer, unterschiedlicher Ausführungswiederholungen, unterschiedlicher Ausführungskomplexität, unterschiedlicher Ausführungsparallelität und/oder unterschiedlicher Ausführungsentfernung entsprechende Übertragungscharakteristiken ermittelt und hierauf basierend eine Performance bzw. Skalierbarkeit des jeweiligen Microservices bzw. der Microservice-Anwendung ermittelt. Hierdurch kann ein vollumfassender Test der zu testenden Microservice-Anwendung bereitgestellt werden.

Eine Ausführungsdauer einer Datenabfrage ist im Sinne der Anmeldung eine Zeitdauer, die zur Bearbeitung der Datenabfrage benötigt wird. Eine Anzahl von Ausführungswiederholungen einer Datenabfrage ist im Sinne der Anmeldung eine Zahl von nacheinander auszuführenden identischen Datenabfragen. Eine Ausführungskomplexität einer Datenabfrage ist im Sinne der Anmeldung eine Komplexität der in der jeweiligen Datenabfrage abgefragten Daten des jeweils zu testenden Microservices. Eine Ausführungsparallelität einer Datenabfrage ist im Sinne der Anmeldung eine Anzahl von parallel durch verschiedene Client-Instanzen ausgeführte Datenabfrage. Eine Ausführungsentfernung einer Datenabfrage beschreibt im Sinne der Anmeldung eine räumliche Distanz zwischen der jeweiligen zu testenden Microservice-Anwendung und der die Datenabfrage aussendenden Client-Instanz der Testinfrastruktur und beschreibt eine bei der Datenübertragung zu überbrückende räumliche Distanz.

Nach einer Ausführungsform umfasst die Übertragungscharakteristik eine Zeitdauer der Datenübertragung der Antwortdaten von der Anwendungsprogrammierschnittstelle zur Client-Instanz und/oder eine Datenmenge der übertragenen Antwortdaten und/oder ein Erfolg/Misserfolg der Datenabfrage.

Hierdurch kann der technische Vorteil erreicht werden, dass eine präzise Beurteilung der Performance der zu testenden Microservice-Anwendung bereitgestellt werden kann. Indem über die Übertragungscharakteristik eine Zeitdauer berücksichtigt wird, die zur Datenübertragung der Antwortdaten von der jeweiligen Anwendungsprogrammierschnittstelle des zu testenden Microservices zur Client-Instanz ausgehend vom Zeitpunkt der gestellten Datenabfrage durch die Client-Instanz benötigt wird, kann eine zeitliche Effizienz bzw. Performance der jeweiligen zu testenden Microservice-Anwendung ermittelt werden. Indem basierend auf dem Testergebnis eine entsprechende Anpassung der jeweiligen Microservice-Anwendung durchgeführt wird, kann eine Verbesserung der Zeiteffizienz der zu testenden Microservice-Anwendung erreicht werden, wodurch eine damit verbundene Effizienz der benötigten Rechenkapazität der sowohl die Microservice-Anwendung als auch die Client-Instanzen betreibenden Datenverarbeitungsanlagen erzielt werden kann.

Durch eine zeiteffizientere Microservice-Anwendung kann Rechenkapazität sowohl auf dem die Anwendung ausführenden Gerät als auch auf dem die Dienste der Microservice-Anwendung in Anspruch nehmenden Client-Gerät verringert werden. Gleiches gilt für die Berücksichtigung der bei einer Datenabfrage bereitgestellten Datenmenge der übertragenen Antwortdaten. Bei einer Beurteilung der Performance der jeweiligen zu testenden Microservice-Anwendung in Bezug auf die als Antwort auf entsprechend gestellte Datenabfragen ausgesendeten Datenmenge der Antwortdaten und durch eine entsprechende Anpassung der Microservice-Anwendung in Bezug auf die Datenmenge der ausgesendeten Antwortdaten kann eine höhere Effizienz der Microservice-Anwendung erreicht werden.

Durch eine erhöhte durchschnittliche Datenmenge der ausgesendeten Antwortdaten der jeweiligen Microservices kann erreicht werden, dass zur Abfrage der jeweiligen bereitgestellten Antwortdaten eine geringere Anzahl von aufeinander folgenden Datenabfragen durch die jeweils den Service in Anspruch nehmenden Client-Geräte benötigt wird. Hierdurch kann wiederum eine benötigte Rechenkapazität der die Microservice-Anwendung betreibenden Datenverarbeitungsanlage bzw. des Client-Geräts verringert werden.

Darüber hinaus kann eine Datenübertragung der Antwortdaten effizienter ausgestaltet werden. Bei Berücksichtigung der Erfolgs- bzw. Misserfolgsrate der während des Tests gestellten Datenabfragen zur Bestimmung der Performance der zu testenden Microservice-Anwendung und bei einer entsprechenden Anpassung der jeweiligen Microservice-Anwendung in Bezug auf die ermittelte Erfolgs- bzw. Misserfolgsrate gestellter Datenabfragen kann eine Effizienz der Microservice-Anwendung erhöht werden. Hierdurch kann wiederum erreicht werden, dass zur Inanspruchnahme des jeweiligen Services der Microservice-Anwendung eine geringere Anzahl von Datenabfragen gestellt werden müssen. Dies wiederum reduziert die benötigte Rechenkapazität sowohl der die Microservice-Anwendung betreibenden Datenverarbeitungsanlage als auch des die Dienste der Microservice-Anwendung in Anspruch nehmenden Client-Geräts.

Nach einer Ausführungsform umfasst das automatische Generieren der Testinfrastruktur ein Ausführen wenigstens eines Generierungsskripts gemäß dem Infrastructure-as-Code Prinzip, und wobei im Generierungsskript eine Ausgestaltung der Testinfrastruktur, insbesondere eine Ausgestaltung und/oder Anzahl der Client-Instanzen, definiert ist.

Hierdurch kann der technische Vorteil erreicht werden, dass eine präzise und effiziente Generierung der Testinfrastruktur bereitgestellt werden kann. Durch Verwendung des Infrastructure-as-Code Prinzips kann erreicht werden, dass eine präzise Ausgestaltung der Infrastruktur und insbesondere der Client-Instanzen ermöglicht ist, sodass die Infrastruktur ausschließlich auf die zur Durchführung des Tests der Microservice-Anwendung benötigten Komponenten beschränkt ist. Hierdurch kann Speicherkapazität sowie Rechenkapazität des die Testinfrastruktur betreibenden Datenverarbeitungssystems eingespart werden. Darüber hinaus kann über die Verwendung des Infrastructure-as-Code Prinzips erreicht werden, dass die Testinfrastruktur optimal an die benötigten Rahmenbedingungen zum Testen der Microservice-Anwendung angepasst ist. Hierdurch kann ein möglichst effizienter Test der Microservice-Anwendung erreicht werden, wodurch sowohl die Durchführungsdauer als auch die benötigte Rechenkapazität zur Durchführung des Tests der Microservice-Anwendung optimiert werden kann.

Nach einer Ausführungsform umfasst das automatische Generieren des Ausführungsskripts auf Basis der Kenndaten der Anwendungsprogrammierschnittstelle eine Programmierung gemäß eines Low-Code Prinzips.

Hierdurch kann der technische Vorteil erreicht werden, dass eine möglichst präzise und einfache Generierung der Ausführungsskripte auf Basis der Kenndaten der Anwendungsprogrammierschnittstellen der zu testenden Microservice-Anwendung ermöglicht ist. Durch die Verwendung des Low-Code Prinzips zur Generierung der Ausführungsskripte ist eine möglichst rechenkapazitätseffiziente Programmierung der Ausführungsskripte ermöglicht. Darüber hinaus können die Ausführungsskripte auf die benötigte Information beschränkt und rechenkapazitätseffizient programmiert sein, sodass eine Ausführungsform der Ausführungsskripte ebenfalls lediglich eine minimierte Rechenkapazität benötigt.

Nach einer Ausführungsform wird das Verfahren auf einer Serverarchitektur, insbesondere auf einem Cloud-Server ausgeführt.

Hierdurch kann der technische Vorteil erreicht werden, dass ein möglichst breiter Anwendungsbereich des erfindungsgemäßen Verfahrens erreicht wird.

Nach einer Ausführungsform ist die Microserviceanwendung eingerichtet, einen Automatisierungsprozess eines Automatisierungssystems mit wenigstens einem Sensor und wenigstens einem Aktor zu steuern, wobei die Microserviceanwendung wenigstens einen ersten Microservice, einen zweiten Microservice und einen dritten Microservice umfasst, wobei die ersten bis dritten Microservices eingerichtet sind, mittels entsprechender Anwendungsprogrammierschnittstellen miteinander zu kommunizieren, wobei der ersten Microservice eingerichtet ist, Sensordaten des Sensors einzulesen, wobei der zweite Microservice eingerichtet ist, die vom ersten Microservice eingelesenen Sensordaten zu verarbeiten und entsprechende Steuerdaten zu generieren, und wobei der dritte Microservice eingerichtet ist, auf Basis der Steuerdaten des zweiten Microservices den Aktor anzusteuern.

Hierdurch kann der technische Vorteil erreicht werden, dass durch den Test der Microservice-Anwendung gemäß den oben genannten Verfahrensschritten eine Steuerung eines Automatisierungsprozesses eines Automatisierungssystems insbesondere in Bezug auf die Performance der die Steuerung ausführenden Microservices der Microservice-Anwendung verbessert werden kann. Durch Bestimmung der Performance der einzelnen Microservice der Microservice-Anwendung und durch eine entsprechende Anpassung der jeweiligen Microservices kann somit die Steuerung des Automatisierungsprozesses verbessert werden.

Nach einem zweiten Aspekt wird ein Computerprogrammprodukt, umfassend Befehle, die bei der Ausführung des Programms durch einen Computer diesen veranlassen, das erfindungsgemäße Verfahren auszuführen, bereitgestellt.

Die oben beschriebenen Eigenschaften, Merkmale und Vorteile dieser Erfindung sowie die Art und Weise, wie diese erreicht werden, werden klarer und deutlicher verständlich durch die Erläuterungen der folgenden, stark vereinfachten, schematischen Darstellungen bevorzugter Ausführungsbeispiele.

### Hierbei zeigen jeweils

FIG 1 eine schematische Darstellung eines Automatisierungssystems mit einer Microserviceanwendung und einer Testinfrastruktur gemäß einer Ausführungsform;
FIG 2 ein Flussdiagramm eines Verfahrens zum Testen einer Microservice-Anwendung gemäß einer weiteren Ausführungsform;
FIG 3 ein weiteres Flussdiagramm des Verfahrens zum Testen einer Microservice-Anwendung gemäß einer weiteren Ausführungsform;
FIG 4 eine schematische Darstellung einer Microservice-Anwendung und einer Testarchitektur gemäß einer Ausführungsform; und
FIG 5 eine schematische Darstellung eines Computerprogrammprodukts.

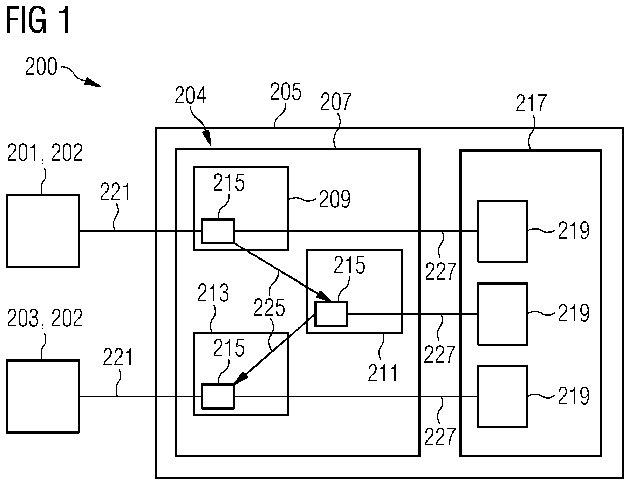

FIG 1 zeigt eine schematische Darstellung eines Automatisierungssystems 200 mit einer Microservice-Anwendung 215 und einer Testinfrastruktur 217 gemäß einer Ausführungsform.

In der Ausführungsform in FIG 1 umfasst das Automatisierungssystem 200 eine Steuereinheit 204, die auf einer Serverarchitektur 205 betrieben wird und eine Mehrzahl von Feldgeräten 202. Die Mehrzahl von Feldgeräten 202 umfasst in der gezeigten Ausführungsform einen Sensor 201 und einen Aktor 203, die jeweils über eine Datenverbindung 221 mit der Steuereinheit 204 verbunden sind.

Die Steuereinheit 204 umfasst ferner eine Microservice-Anwendung 207. Die Microservice-Anwendung 207 umfasst einen ersten Microservice 209, einen zweiten Microservice 211 und einen dritten Microservice 213. Die Microservices 209, 211, 213 umfassen jeweils eine Anwendungsprogrammierschnittstelle 215 und sind eingerichtet, über die Anwendungsprogrammierschnittstelle 215 über eine Datenkommunikation 225 untereinander zu kommunizieren und Daten auszutauschen.

In der gezeigten Ausführungsform ist der erste Microservice 209 eingerichtet, Sensordaten des Sensors 201 einzulesen. Der zweite Microservice 211 ist eingerichtet, die Sensordaten des Sensors 201 zu verarbeiten und entsprechende Steuerdaten zu generieren. Der dritte Microservice 213 hingegen ist eingerichtet, basierend auf den durch den zweiten Microservice 211 generierten Steuerdaten den Aktor 203 anzusteuern. Hierüber kann somit ein Automatisierungsprozess gesteuert werden.

In der gezeigten Ausführungsform ist auf der Serverarchitektur 205 ferner eine Testinfrastruktur 217 mit einer Mehrzahl von Client-Instanzen 219 eingerichtet. Die Client-Instanzen 219 sind hierbei eingerichtet, Datenanfragen 227 an die Anwendungsprogrammierschnittstellen 215 der Microservices 209, 211, 213 der Microservice-Anwendung 207 auszusenden und entsprechende Antwortdaten der Microservices 209, 211, 213 zu empfangen und gegebenenfalls auszuwerten. Die Testinfrastruktur 217 inklusive der Client-Instanzen 219 ist eingerichtet, das erfindungsgemäße Verfahren 100 zum Testen einer Microservice-Anwendung 207 mit wenigstens einem Microservice 209, 211, 213 mit wenigstens einer Anwendungsprogrammierschnittstelle 215 auszuführen.

Die Client-Instanzen 219 können in der Testinfrastruktur 217 als individuelle Instanzen ausgebildet sein, die unabhängig voneinander agieren können. Gegebenenfalls können die einzelnen Client-Instanzen 219 ferner eingerichtet sein, eine Datenkommunikation untereinander durchzuführen. Gemäß einer Ausführungsform können die einzelnen Client-Instanzen 219 beispielsweise in entsprechenden Arbeitsumgebungen, beispielsweise Containerelementen, in Form von virtuellen Maschinen bzw. individuell ausführbarer Laufzeitumgebungen ausgeführt werden. Die Client-Instanzen 219 können in Abhängigkeit der zu testenden Microservices entsprechend angepasst ausgebildet sein. Die Client-Instanzen 219 sind wenigstens eingerichtet, entsprechende Datenabfragen an die jeweils zu testenden Microservices 209, 211, 213 auszusenden, Antwortdaten der Microservices zu empfangen und gegebenenfalls auszuwerten.

Abweichend zu der in FIG 1 gezeigten Ausführungsform kann eine zu testende Microservice-Anwendung 207 eine beliebige Anzahl von Microservices umfassen. Abweichend zu der in FIG 1 gezeigten Ausführungsform können die Microservices der Microservice-Anwendung 207 beliebige Dienste anbieten, die über das in FIG 1 dargestellte Steuern eines Automatisierungsprozesses hinausgehen. Darüber hinaus kann eine Datenkommunikation zwischen Microservices 209, 211, 213 einer Microservice-Anwendung 207 beliebig und von der in FIG 1 dargestellten Form abweichend ausgestaltet sein.

Abweichend zu der in FIG 1 gezeigten Ausführungsform kann eine Testinfrastruktur 217 eine beliebige Anzahl verschiedener Client-Instanzen 219 aufweisen. Darüber hinaus können gemäß einer Ausführungsform die zu testende Microservice-Anwendung 207 und die Testinfrastruktur 217 abweichend zu der in FIG 1 gezeigten Ausführungsform auf zwei verschiedenen, gegebenenfalls räumlich getrennten, Serverarchitekturen 205 angeordnet sein. Diese Serverarchitekturen 205 können beispielsweise als Cloud-Server ausgebildet sein.

Eine Datenkommunikation zwischen den Client-Instanzen 219 der Testinfrastruktur 217 und den zu testenden Microservices 209, 211, 213 der zu testenden Microservice-Anwendung 207 in Form des Aussendens einer Mehrzahl von Datenabfragen 227 und entsprechenden Antwortdaten kann beispielsweise über einen Datenbus realisiert sein. Alternativ kann eine Datenkommunikation über das Internet realisiert sein.

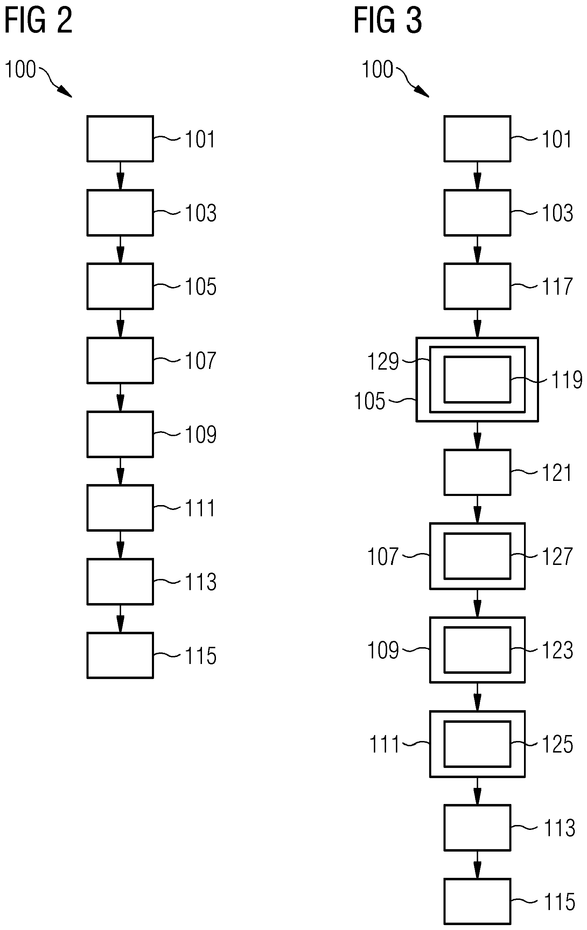

FIG 2 zeigt ein Flussdiagramm eines Verfahrens 100 zum Testen einer Microservice-Anwendung 215 gemäß einer Ausführungsform.

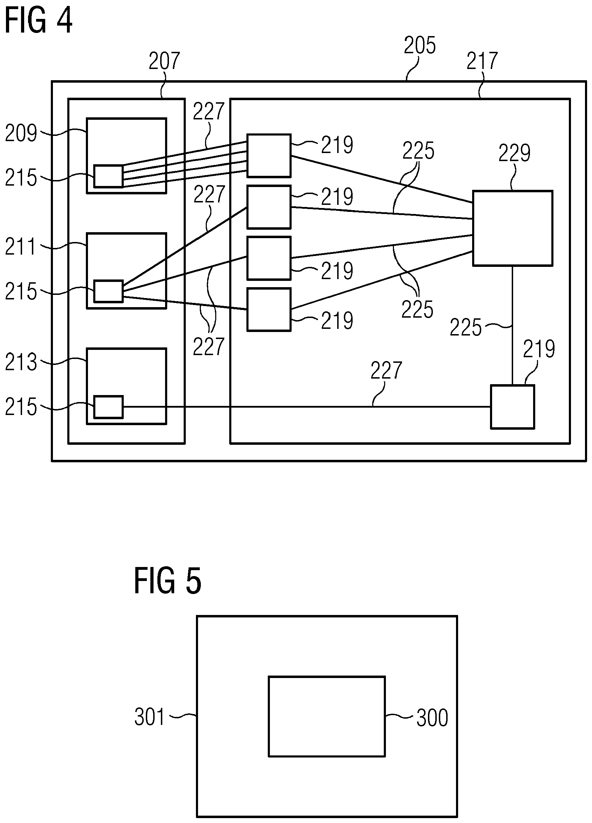

Das Verfahren 100 zum Testen einer Microservice-Anwendung 207 mit wenigstens einem Microservice 209, 211, 213 mit wenigstens einer Anwendungsprogrammierschnittstelle 215 ist auf ein Automatisierungssystem 200 gemäß FIG 1 anwendbar. Insbesondere ist das erfindungsgemäße Verfahren 100 auf eine Testinfrastruktur 217 gemäß FIG 4 anwendbar.

In einem ersten Verfahrensschritt 101 werden zum Testen einer Microservice-Anwendung 207 mit wenigstens einem Microservice 209, 211, 213 mit wenigstens einer Anwendungsprogrammierschnittstelle 215 ein Satz von Kenndaten der Anwendungsprogrammierschnittstelle 215 des zu testenden Microservices 209, 211, 213 der Microservice-Anwendung 207 ausgelesen und wenigstens ein Endpunkt der Anwendungsprogrammierschnittstelle 215 ermittelt. Der Endpunkt der Anwendungsprogrammierschnittstelle 215 beschreibt hierbei den jeweils zu testenden Microservice und definiert dadurch die von dem jeweiligen Microservice 209, 211, 213 abfragbaren Antwortdaten. Die abfragbaren Antwortdaten des Microservice können hierbei zwischen verschiedenen Microservices variieren und hängen mit der durch den Microservice zur Verfügung gestellten Diensten zusammen. Die Kenndaten der Anwendungsprogrammierschnittstelle 215 können sowohl die abfragbaren Antwortdaten als auch die hierzu zu formulierenden Datenabfragen umfassen. Die Anwendungsprogrammierschnittstelle 215 kann beispielsweise als eine REST-API bzw. basierend auf einer Graph-QL Struktur formuliert sein.

In einem darauf folgenden Verfahrensschritt 105 wird basierend auf den Kenndaten der Anwendungsprogrammierschnittstelle 215 automatisch ein Ausführungsskript generiert. Das Ausführungsskript definiert wenigstens eine Datenabfrage 227 zum Aufrufen des ermittelten Endpunkts und zum Abfragen der abfragbaren Antwortdaten des zu testenden Microservices. Darüber hinaus wird durch das Ausführungsskript wenigstens eine Übertragungscharakteristik definiert. Die Übertragungscharakteristik beschreibt eine messbare Größe, mittels der eine Beurteilung der Datenübertragung bzw. der Verarbeitung einer entsprechenden Datenabfrage durch den jeweils zu testenden Microservice ermöglicht.

Gemäß einer Ausführungsform kann die Übertragungscharakteristik beispielsweise eine Zeitdauer umfassen, die ausgehend vom Aussenden einer entsprechenden Datenabfrage durch eine Client-Instanz 219 bis zum Aussenden entsprechender Antwortdaten durch den zu testenden Microservice benötigt wird. Alternativ oder zusätzlich kann eine Übertragungscharakteristik eine Datenmenge von als Antwort auf entsprechende Datenabfragen ausgesendeten Antwortdaten des zu testenden Microservices umfassen. Alternativ oder zusätzlich kann eine Übertragungscharakteristik eine Erfolgs- bzw. Misserfolgsrate von gestellten Datenabfragen umfassen. Mittels der Übertragungscharakteristik kann somit eine Performance des jeweils zu testenden Microservices bzw. der zu testenden Microservice-Anwendung ermittelt werden. Eine Datenabfrage kann beispielsweise in Form einer Data Query ausgestaltet sein und gemäß den durch die Anwendungsprogrammierschnittstelle 215 definierten Kommunikationsstandards entsprechende Aufforderung zum Aussenden gewünschter Daten des zu testenden Microservices umfassen. Gemäß einer Ausführungsform kann das automatisch generierte Ausführungsskript eine beliebige Anzahl verschiedener Datenabfragen umfassen. Insbesondere kann für eine Testinfrastruktur 217 mit einer beliebigen Anzahl verschiedener Client-Instanzen 219 für jede Client-Instanz 219 individuell angepasste Datenabfragen definiert sein. Ebenso kann für eine zu testende Microservice-Anwendung 207 mit einer Mehrzahl verschiedener Microservices im automatisch generierten Ausführungsskript eine Mehrzahl verschiedener und für jeden zu testenden Microservice individuell angepasster Datenabfragen definiert sein.

In einem folgenden Verfahrensschritt 107 wird automatisch eine Testinfrastruktur 217 generiert. Die Testinfrastruktur 217 umfasst wenigstens eine Client-Instanz 219, die eingerichtet ist, Datenabfragen 227 des Ausführungsskripts an die jeweils zu testende Microservice-Anwendung 207 auszusenden und entsprechende Antwortdaten der Microservices 209, 211, 213 der zu testenden Microservice-Anwendung 207 zu empfangen und gegebenenfalls zu verarbeiten.

Eine zeitliche Abfolge der Verfahrensschritte 105 und 107 ist durch die hier ausgeführte Darstellung nicht impliziert. Insbesondere können die Verfahrensschritte 105, 107 zeitlich nacheinander bzw. zeitlich parallel ausgeführt werden.

Wie oben beschrieben kann die Testinfrastruktur 217 auf einer Serverarchitektur 215, beispielsweise einem Cloud-Server, eingerichtet sein und eine beliebige Anzahl von Client-Instanzen 219 umfassen. Die Anzahl der Client-Instanzen 219 inklusive der jeweiligen individuellen Ausgestaltung der einzelnen Client-Instanzen 219 kann individuell auf die zu testende Microservice-Anwendung 207 bzw. die zu testenden Microservices 209, 211, 213 der Microservice-Anwendung 207 angepasst werden.

In einem Verfahrensschritt 109 wird das Ausführungsskript durch die Client-Instanz 219 bzw. die Mehrzahl von Client-Instanzen 219 der Testinfrastruktur 217 ausgeführt und in einem Verfahrensschritt 111 werden entsprechende Datenabfragen 227 durch die Client-Instanzen 219 an die Anwendungsprogrammierschnittstellen 215 der zu testenden Microservices 209, 211, 213 ausgesendet. In einem Verfahrensschritt 113 werden hingegen entsprechende Antwortdaten der Microservices 209, 211, 213 durch die jeweiligen Client-Instanzen 219 empfangen. Nach Empfangen der jeweiligen Antwortdaten durch die Client-Instanzen 219 wird in einem Verfahrensschritt 215 die jeweilige Übertragungscharakteristik ermittelt. Wie oben beschrieben kann die Übertragungscharakteristik beispielsweise eine Zeitdauer, die zwischen Aussenden der Datenabfrage und Empfangen der bereitgestellten Antwortdaten gestrichen ist, eine Datenmenge der bereitgestellten Antwortdaten oder ein Erfolg bzw. Misserfolg der jeweiligen Datenabfrage umfassen. Eine Datenabfrage ist hierbei erfolgreich, wenn die in der Datenabfrage angeforderten Daten fehlerfrei durch den jeweiligen Microservice bereitgestellt werden.

Auf Basis der ermittelten Übertragungscharakteristik kann eine Performance der zu testenden Microservice-Anwendung 207 bestimmt werden. Eine geringe Übertragungsdauer bzw. eine hohe Erfolgsquote und eine geringe Misserfolgsquote der jeweiligen Datenabfragen kann hierbei beispielsweise zu einer hohen Performance des getesteten Microservices führen.

Die Ermittlung der Übertragungscharakteristik und die daraus bestimmte Beurteilung der Performance der getesteten Microservices kann beispielsweise durch die einzelnen Client-Instanzen 219 der Testinfrastruktur 217 durchgeführt werden. Alternativ kann zur Beurteilung der Performance basierend auf den ermittelten Übertragungscharakteristiken die Testinfrastruktur 217 ein zusätzliches und in FIG 1 nicht dargestelltes Beurteilungsmodul umfassen.

Basierend auf den Testergebnisses des Verfahrens 100, insbesondere der ermittelten Performance der getesteten Microservice-Anwendung 207, können Änderungen an der Microservice-Anwendung 207 bzw. an den jeweiligen Microservices vorgenommen werden, um somit eine Microservice-Anwendung 207 mit verbesserter Performance zu erreichen.

FIG 3 zeigt ein weiteres Flussdiagramm des Verfahrens 100 zum Testen einer Microservice-Anwendung 215 gemäß einer weiteren Ausführungsform.

Die Ausführungsform in FIG 3 basiert auf der Ausführungsform in FIG 2 und umfasst alle dort beschriebenen Verfahrensschritte. Sofern diese in der Ausführungsform in FIG 3 unverändert bleiben, wird von einer erneuten detaillierten Beschreibung abgesehen.

Abweichend zu der Ausführungsform in FIG 2 umfasst das Verfahren 100 in der Ausführungsform in FIG 3 einen Verfahrensschritt 117. Im Verfahrensschritt 117 werden auf Basis der Kenndaten der Anwendungsprogrammierschnittstellen 215 Parameter der Anwendungsprogrammierschnittstelle 215 ermittelt. Parameter der Anwendungsprogrammierschnittstelle 215 beschreiben hierbei einzelne Aspekte der durch den jeweiligen Microservice zur Verfügung gestellten Daten. Die Parameter können insbesondere im Zuge einer Data Query sowohl den Request Body als auch den Request Header einer entsprechenden Datenabfrage betreffen. Je nach Ausgestaltung des jeweils zu testenden Microservices können durch die gemäß den Kenndaten der jeweiligen Anwendungsprogrammierschnittstelle 215 definierten Parameter unterschiedliche Aspekte der durch den jeweiligen Microservice 209, 211, 213 bereitgestellten Daten und damit verbunden der durch den Microservice 209, 211, 213 zur Verfügung gestellten Dienste beschrieben sein.

Basierend auf den Kenndaten der Anwendungsprogrammierschnittstellen 215 und den ermittelten Parametern werden beim automatischen Generieren des Ausführungsskripts im Verfahrensschritt 105 in einem Verfahrensschritt 119 entsprechende Datenabfragen definiert. Einzelne Datenabfragen können hierbei auf einzelne Parameter bzw. Gruppen von Parametern der Anwendungsprogrammierschnittstelle 215 angepasst sein, sodass durch entsprechende Datenabfragen beliebige Parameter der Anwendungsprogrammierschnittstelle 215 einzeln oder in beliebiger Kombination mit weiteren Parametern abgefragt werden können. Darüber hinaus können im Ausführungsskript Datenabfragen definiert werden, durch die einzelne Parameter in einem durch die Anwendungsprogrammierschnittstelle 215 vorgegebenen Wertebereich variiert werden. Durch Aussenden der jeweiligen Datenabfragen kann somit eine beliebige Variation der einzelnen Parameter der Anwendungsprogrammierschnittstelle 215 erreicht werden. Durch das spätere Aussenden dieser Datenabfragen kann somit ein Microservice in Bezug auf jeden bereitgestellten Parameter der Anwendungsprogrammierschnittstelle 215 über den gesamten vordefinierten Wertebereich des jeweiligen Parameters in Bezug auf die jeweilige Performance des Microservices getestet werden.

Gemäß der Ausführungsform in FIG 3 umfasst das automatische Generieren des Ausführungsskripts ein Ausführen einer Low-Code Programmierung gemäß einem Verfahrensschritt 129. Auf Basis der ausgelesenen Kenndaten der Anwendungsprogrammierschnittstellen 215 kann somit durch Ausführen der Low-Code Programmierung automatisch das gewünschte Ausführungsskript inklusive der darin definierten Datenabfragen generiert werden.

In einem Verfahrensschritt 121 wird ferner automatisch ein Testplan zum Ausführen des Ausführungsskripts durch die Client-Instanzen 219 der Testinfrastruktur 217. Im Testplan kann eine Abfolge des Aussendens der Mehrzahl verschiedener Datenabfragen durch die Mehrzahl von Client-Instanzen 219 definiert sein. Der Testplan kann hierbei derart ausgestaltet sein, dass eine möglichst zeiteffiziente Ausführung des Ausführungsskripts und damit verbunden ein möglich zeiteffizientes Aussenden der einzelnen Datenabfragen 227 durch die Client-Instanzen 219 erreicht wird.

In der gezeigten Ausführungsform umfasst das automatische Generieren der Testinfrastruktur im Verfahrensschritt 107 ferner ein automatisches Ausführen eines Generierungsskripts gemäß des Infrastructur-as-Code Prinzips in einem Verfahrensschritt 127. Die Testinfrastruktur kann somit automatisch gemäß der im Infrastructure-as-Code Generierungsskript definierten Struktur aufgestellt werden.

Die Ausführung des Ausführungsskripts im Verfahrensschritt 109 wird in der gezeigten Ausführungsform gemäß dem Verfahrensschritt 123 gemäß dem definierten Testplan vorgenommen.

Analog werden die im Ausführungsskript definierten Datenabfragen 227 gemäß dem Testplan durch die einzelnen Client-Instanzen 219 in einem Verfahrensschritt 125 an die jeweils adressierten zu testenden Microservices 209, 211, 213 ausgesendet.

FIG 4 zeigt eine schematische Darstellung einer Microservice-Anwendung 215 und einer Testarchitektur 217 gemäß einer Ausführungsform.

In der Ausführungsform in FIG 4 sind analog zur Ausführungsform in FIG 1 die zu testende Microservice-Anwendung 207 und die Testinfrastruktur 217 auf einer gemeinsamen Serverarchitektur 205 eingerichtet. Wie oben bereits erwähnt können die alternativ die Microservice-Anwendung 207 und die Testinfrastruktur 217 auf individuell und räumlich getrennten Serverarchitekturen eingerichtet sein.

In der gezeigten Ausführungsform umfasst die Microservice-Anwendung 207 wiederum einen ersten Microservice 209, einen zweiten Microservice 211 und einen dritten Microservice 213, die jeweils eine Anwendungsprogrammierschnittstelle 215 aufweisen. Die Testinfrastruktur weist hingegen fünf Client-Instanzen 219 auf.

FIG 4 dient zur Illustration einer Übertragungscharakteristik, insbesondere einer Ausführungswiederholung von Datenabfragen, einer Ausführungsparallelität von Datenabfragen bzw. einer Ausführungsentfernung von Datenabfragen.

In der gezeigten Ausführungsform wird von einer Client-Instanz 219 der Testinfrastruktur 217 an den ersten Microservice 209 insbesondere an die Anwendungsprogrammierschnittstelle 215 des ersten Microservices 209 eine Mehrzahl von Datenabfragen 227 ausgesendet. Die einzelnen Datenabfragen 227 werden hierbei in einer vorbestimmten Reihenfolge zeitlich nacheinander durch die jeweilige Client-Instanz 219 ausgesendet. Durch die entsprechende Bereitstellung der jeweils in den Datenabfragen 227 angeforderten Antwortdaten durch den ersten Microservice 209 kann eine Performance des jeweiligen Microservices bei einer entsprechenden Ausführungswiederholung in Form der zeitlich nacheinander wiederholt ausgesendeten Datenabfragen ermittelt werden. Die einzelnen Datenabfragen 227 können hierbei identische Datenabfragen sein, in denen jeweils gleiche Antwortdaten angefordert werden. In den einzelnen Datenabfragen können entsprechend verschiedene Parameter der durch die Anwendungsprogrammierschnittstelle 217 zur Verfügung gestellten Parameter abgefragt werden. Insbesondere kann durch die Mehrzahl von wiederholt ausgeführten Datenabfragen eine Variation der abgefragten Parameter erreicht werden, indem in den verschiedenen Datenabfragen die abgefragten Parameter innerhalb eines vorbestimmten Wertebereichs variiert werden. Zur Bestimmung der Performance des jeweiligen Microservices kann eine Ermittlung der Übertragungscharakteristik vorgenommen werden. Hierzu kann beispielsweise eine Zeitdauer zwischen dem Aussenden einer Datenabfrage und dem Bereitstellen der entsprechenden Antwortdaten gemessen werden.

Alternativ kann eine Datenmenge, beispielsweise eine durchschnittliche Datenmenge, der durch den jeweiligen Microservice auf die ausgesendeten Datenabfragen bereitgestellten Antwortdaten ermittelt werden. Alternativ kann eine Erfolgs- bzw. Misserfolgsrate der ausgesendeten Datenabfragen bestimmt werden. Basierend auf der ermittelten Übertragungscharakteristik kann somit eine entsprechende Performance des getesteten Microservices beurteilt werden, bei der beispielsweise eine kurze Übertragungsdauer bzw. eine hohe Erfolgsquote und niedrige Misserfolgsquote als eine hohe Performance des jeweiligen Microservices beurteilt wird. Eine entsprechende Auswertung der ermittelten Übertragungscharakteristik und eine darauf basierende Beurteilung der Performance des getesteten Microservices kann beispielsweise durch ein Beurteilungsmodul 229 der Testinfrastruktur 217 vorgenommen werden. Hierzu ist das Beurteilungsmodul 229 über eine Datenkommunikation 225 mit den Client-Instanzen 219 verbunden.

In der gezeigten Ausführungsform werden an den zweiten Microservice 211 durch drei Client-Instanzen 219 parallel Datenabfragen 227 ausgesendet. Durch das parallele Aussenden von Datenabfragen 227 mehrerer Client-Instanzen 219 an einen zu testenden Microservice ist eine Ausführungsparallelität dargestellt. Durch Empfangen entsprechender Antwortdaten des adressierten Microservices 211 und eine entsprechende Bestimmung der Übertragungscharakteristik kann somit eine Skalierbarkeit des getesteten Microservices 211 ermittelt werden. Über die Skalierbarkeit kann eine Reaktion bzw. Performance des getesteten Microservices bei einer gleichzeitigen Beanspruchung durch mehrere Clients ermittelt werden. Die Übertragungscharakteristik kann hierbei wie oben dargestellt eine Übertragungsdauer, eine Datenmenge der übertragenen Antwortdaten bzw. eine Erfolgs- bzw. Misserfolgsquote der ausgesendeten Datenabfragen 227 umfassen. Die einzelnen Datenabfragen 227, die parallel von verschiedenen Clients ausgesendet werden, können hierbei identische Datenabfragen sein. Alternativ können die Datenabfragen 227 unterschiedliche Parameter der Anwendungsprogrammierschnittstelle 215 des zu testenden Microservices betreffen.

In FIG 4 empfängt der dritte Microservice 213 eine Datenabfrage 227 von einer fünften Client-Instanz 219. Die Clients mit einer größeren Distanz zum dritten Microservice 213 dargestellt. Hierdurch soll eine erhöhte Übertragungsdistanz illustriert sein, bei der die zu übertragenden Datenabfragen 227 und die entsprechenden Antwortdaten über einen größeren Übertragungsweg übertragen werden. Hierüber kann eine Performance des jeweils getesteten Microservices für Datenabfragen von Clients getestet werden, die von einem entfernten Sendepunkt und somit über einen vergrößerten Übertragungsweg übertragen werden müssen.

Alternativ zu den in FIG 4 dargestellten Testszenarien, kann ferner eine Performance eines zu testenden Microservices in Bezug auf eine Übertragungskomplexität der in der jeweiligen Datenabfrage 227 abgefragten Information des Microservices bestimmt werden. Die Übertragungskomplexität beschreibt hierbei die Komplexität der in der Datenabfrage abgefragten Daten des Microservices. In Abhängigkeit der abgefragten Komplexität der Daten bzw. Dienste des Microservices kann somit die entsprechende Performance des Microservices bestimmt werden. Alternativ kann die Performance in Abhängigkeit einer Ausführungsdauer beurteilt werden, bei der eine Dauer der Ausführung der jeweiligen Datenabfrage berücksichtigt wird.

FIG 5 zeigt eine schematische Darstellung eines Computerprogrammprodukts 300.

Das Computerprogrammprodukt ist in der gezeigten Ausführungsform auf einem Speichermedium 301 gespeichert. Das Speichermedium 301 kann beispielsweise eine Festplatte einer Datenverarbeitungsanlage, eine externe Festplatte oder ein anderes aus dem Stand der Technik bekanntes Speichermedium sein.

Obwohl die Erfindung im Detail durch die genannten Ausführungsformen näher illustriert und beschrieben wurde, ist die Erfindung nicht durch die offenbarten Beispiele eingeschränkt und andere Variationen können vom Fachmann hieraus abgeleitet werden, ohne den Schutzumfang der Erfindung zu verlassen.

## Patentansprüche

1. Verfahren (100) zum Testen einer Microservice-Anwendung (207) mit wenigstens einem Microservice (209, 211, 213) mit wenigstens einer Anwendungsprogrammierschnittstelle (215), umfassend:
Auslesen (101) von Kenndaten der Anwendungsprogrammierschnittstelle (215) des Microservices (209, 211, 213) der Microserviceanwendung (207) und Ermitteln (103) wenigstens eines Endpunkts der Anwendungsprogrammierschnittstelle (215), wobei über den Endpunkt abfragebare Antwortdaten des Microservices (209, 211, 213) definiert sind;
Ermitteln (117) einer Mehrzahl von Parametern der Anwendungsprogrammierschnittstelle (215) auf Basis der Kenndaten der Anwendungsprogrammierschnittstelle (215);
Automatisches Generieren (105) eines Ausführungsskripts auf Basis der Kenndaten der Anwendungsprogrammierschnittstelle (215), wobei das Ausführungsskript wenigstens eine Datenabfrage (227) zum Aufrufen des ermittelten Endpunkts und zum Abfragen abfragbarer Antwortdaten und wenigstens eine Übertragungscharakteristik einer Datenübertragung der Antwortdaten definiert, wobei die Übertragungscharakteristik eine Beurteilung einer Bereitstellung der Antwortdaten vom Microservice (209, 211, 213) als Antwort auf eine entsprechende Datenabfrage (227) ermöglicht, wobei das automatische Generieren (105) des Ausführungsskripts ein Definieren (119) einer Mehrzahl von Datenabfragen (227) für die Mehrzahl von Parametern und/oder für Variationen von Werten der Parameter der Anwendungsprogrammierschnittstelle (215) umfasst;
Automatisches Generieren (107) einer Testinfrastruktur (217), wobei die Testinfrastruktur (217) wenigstens eine Client-Instanz (219) umfasst, und wobei die Client-Instanz (219) eingerichtet ist, die Datenabfrage (227) des Ausführungsskripts auszuführen und entsprechende Antwortdaten vom Microservice (209, 211, 213) zu empfangen;
Ausführen (109) des Ausführungsskripts und Aussenden (111) der Mehrzahl von Datenabfrage (227) des Ausführungsskripts durch die Client-Instanz (219) an die Anwendungsprogrammierschnittstelle (215) des Microservices (209, 211, 213) und Empfangen (113) entsprechender Antwortdaten des Microservices (209, 211, 213) durch die Client-Instanz (219); und Ermitteln (115) der Übertragungscharakteristik durch die Client-Instanz (219).

2. Verfahren (100) nach Anspruch 1, ferner umfassend:
Automatisches Generieren (121) eines Testplans, wobei im Testplan eine Abfolge des Aussendens der Mehrzahl von Datenabfragen (227) des Ausführungsskripts definiert ist; und
Ausführen (123) des Ausführungsskripts und Aussenden (125) der Datenabfragen (227) des Ausführungsskripts durch die Client-Instanz (219) an die Anwendungsprogrammierschnittstelle (215) des Microservices (209, 211, 213) gemäß dem Testplan.

3. Verfahren (100) nach Anspruch 2, wobei im Testplan ferner eine Ausführungsdauer und/oder eine Anzahl von Ausführungswiederholungen und/oder eine Ausführungskomplexität und/oder eine Ausführungsparallelität und/oder eine Ausführungsentfernung der Datenabfragen (227) definiert ist, wobei eine Ausführungsdauer eine Zeitdauer einer Datenabfrage (227) beschreibt, wobei eine Anzahl von Ausführungswiederholungen eine Anzahl aufeinander folgender Ausführungen einer Datenabfrage (227) beschreibt, wobei eine Ausführungskomplexität eine Komplexität der durch die Datenabfrage (227) abzufragenden Parameter der Anwendungsprogrammierschnittstelle (215) beschreibt, wobei eine Ausführungsparallelität eine Anzahl von parallel durch verschiedene Client-Instanzen (219) auszuführenden Datenabfragen (227) beschreibt, und wobei eine Ausführungsentfernung eine räumliche Entfernung zwischen der Anwendungsprogrammierschnittstelle (215) und der Client-Instanzen (219) beschreibt.

4. Verfahren (100) nach einem der voranstehenden Ansprüche, wobei die Übertragungscharakteristik eine Zeitdauer der Datenübertragung der Antwortdaten von der Anwendungsprogrammierschnittstelle (215) zur Client-Instanz (219) und/oder eine Datenmenge der übertragenen Antwortdaten und/oder ein Erfolg/Misserfolg der Datenabfrage (227) umfasst.

5. Verfahren (100) nach einem der voranstehenden Ansprüche, wobei das automatische Generieren (107) der Testinfrastruktur (217) ein Ausführen (127) wenigstens eines Generierungsskripts gemäß dem Infrastructure-as-Code Prinzip umfasst, und wobei im Generierungsskript eine Ausgestaltung der Testinfrastruktur (217), insbesondere eine Ausgestaltung und/oder Anzahl der Client-Instanzen (219), definiert ist.

6. Verfahren (100) nach einem der voranstehenden Ansprüche, wobei das automatische Generieren (105) des Ausführungsskripts auf Basis der Kenndaten der Anwendungsprogrammierschnittstelle (215) ein Ausführen (129) einer Programmierung gemäß eines Low-Code Prinzips umfasst.

7. Verfahren (100) nach einem der voranstehenden Ansprüche, wobei das Verfahren auf einer Serverarchitektur (205), insbesondere auf einem Cloud-Server ausgeführt wird.

8. Verfahren (100) nach einem der voranstehenden Ansprüche, wobei die Microserviceanwendung (207) eingerichtet, einen Automatisierungsprozess eines Automatisierungssystems (200) mit wenigstens einem Sensor (201) und wenigstens einem Aktor (203) zu steuern, wobei die Microserviceanwendung (207) wenigstens einen ersten Microservice (209), einen zweiten Microservice (211) und einen dritten Microservice (213) umfasst, wobei die ersten bis dritten Microservices (209, 211, 213) eingerichtet sind, mittels entsprechender Anwendungsprogrammierschnittstellen (215) miteinander zu kommunizieren, wobei der ersten Microservice (209) eingerichtet ist, Sensordaten des Sensors (201) einzulesen, wobei der zweite Microservice (211) eingerichtet ist, die vom ersten Microservice (209) eingelesenen Sensordaten zu verarbeiten und entsprechende Steuerdaten zu generieren, und wobei der dritte Microservice (213) eingerichtet ist, auf Basis der Steuerdaten des zweiten Microservices (211) den Aktor (203) anzusteuern.

9. Computerprogrammprodukt (300), umfassend Befehle, die bei der Ausführung des Programms durch einen Computer diesen veranlassen, das Verfahren (100) gemäß einem der voranstehenden Ansprüche auszuführen.

## Claims

1. Method (100) for testing a microservice application (207) with at least one microservice (209, 211, 213) with at least one application programming interface (215), comprising:
reading (101) characteristic data of the application programming interface (215) of the microservice (209, 211, 213) of the microservice application (207) and ascertaining (103) at least one endpoint of the application programming interface (215), wherein queryable response data of the microservice (209, 211, 213) are defined by way of the endpoint;
ascertaining (117) a plurality of parameters of the application programming interface (215) on the basis of the characteristic data of the application programming interface (215) ;
automatically generating (105) an execution script on the basis of the characteristic data of the application programming interface (215), wherein the execution script defines at least one data query (227) for invoking the ascertained endpoint and for querying queryable response data and at least one transfer characteristic of the data transfer of the response data, wherein the transfer characteristic facilitates an assessment of the provision of the response data from the microservice (209, 211, 213) as a response to a corresponding data query (227), wherein the automatic generation (105) of the execution script comprises a definition (119) of a plurality of data queries (227) for the plurality of parameters and/or for variations of values of the parameters of the application programming interface (215); automatically generating (107) a test infrastructure (217), wherein the test infrastructure (217) comprises at least one client entity (219), and wherein the client entity (219) is set up to execute the data query (227) of the execution script and receive corresponding response data from the microservice (209, 211, 213);
executing (109) the execution script and transmitting (111) the plurality of data queries (227) of the execution script by the client entity (219) to the application programming interface (215) of the microservice (209, 211, 213) and receiving (113) corresponding response data of the microservice (209, 211, 213) by the client entity (219); and ascertaining (115) the transfer characteristic by the client entity (219).

2. Method (100) according to Claim 1, further comprising:
automatically generating (121) a test plan, wherein a transmission sequence for the plurality of data queries (227) of the execution script is defined in the test plan; and
executing (123) the execution script and transmitting (125) the data queries (227) of the execution script by the client entity (219) to the application programming interface (215) of the microservice (209, 211, 213) according to the test plan.

3. Method (100) according to Claim 2, wherein an execution duration and/or a number of execution repetitions and/or an execution complexity and/or an execution parallelism and/or an execution distance of the data queries (227) are/is further defined in the test plan, wherein an execution duration describes the time duration of a data query (227), wherein a number of execution repetitions describes a number of successive executions of a data query (227), wherein an execution complexity describes a complexity of the parameters of the application programming interface (215) to be queried by the data query (227), wherein an execution parallelism describes a number of data queries (227) to be executed in parallel by different client entities (219), and wherein an execution distance describes the spatial distance between the application programming interface (215) and the client entities (219).

4. Method (100) according to any one of the preceding claims, wherein the transfer characteristic comprises a time duration for the data transfer of the response data from the application programming interface (215) to the client entity (219) and/or a data volume of the transferred response data and/or a success/failure of the data query (227).

5. Method (100) according to any one of the preceding claims, wherein the automatic generation (107) of the test infrastructure (217) comprises an execution (127) of at least one generation script in accordance with the infrastructure-as-code principle, and wherein a configuration of the test infrastructure (217), in particular a configuration and/or number of the client entities (219), is/are defined in the generation script.

6. Method (100) according to any one of the preceding claims, wherein the automatic generation (105) of the execution script on the basis of the characteristic data of the application programming interface (215) comprises an execution (129) of programming according to a low-code principle.

7. Method (100) according to any one of the preceding claims, wherein the method is carried out on a server architecture (205), in particular on a cloud server.

8. Method (100) according to any one of the preceding claims, wherein the microservice application (207) is set up to control an automation process of an automation system (200) comprising at least one sensor (201) and at least one actuator (203), wherein the microservice application (207) comprises at least a first microservice (209), a second microservice (211) and a third microservice (213), wherein the first to third microservices (209, 211, 213) are set up to communicate with one another by means of corresponding application programming interfaces (215), wherein the first microservice (209) is set up to read sensor data from the sensor (201), wherein the second microservice (211) is set up to process the sensor data read by the first microservice (209) and to generate corresponding control data, and wherein the third microservice (213) is set up to control the actuator (203) on the basis of the control data of the second microservice (211).

9. Computer program product (300) comprising commands which, when the program is executed by a computer, prompt the latter to carry out the method (100) according to any one of the preceding claims.

## Revendications

1. Procédé (100) pour tester une application microservice (207) avec au moins un microservice (209, 211, 213) présentant au moins une interface de programmation d'application (215), comprenant les étapes consistant à :
lire (101) des données d'identification de l'interface de programmation d'application (215) du microservice (209, 211, 213) de l'application microservice (207) et déterminer (103) au moins un point de terminaison de l'interface de programmation d'application (215), dans lequel des données de réponse du microservice (209, 211, 213) pouvant être interrogées sont définies par le point de terminaison ;
déterminer (117) une pluralité de paramètres de l'interface de programmation d'application (215) sur la base des données d'identification de l'interface de programmation d'application (215) ;
générer automatiquement (105) un script d'exécution sur la base des données d'identification de l'interface de programmation d'application (215), dans lequel le script d'exécution définit au moins une interrogation de données (227) pour appeler le point de terminaison déterminé et pour interroger des données de réponse interrogeables et au moins une caractéristique de transmission d'une transmission de données des données de réponse, dans lequel la caractéristique de transmission permet une évaluation d'une fourniture des données de réponse par le microservice (209, 211, 213) en tant que réponse à une interrogation de données correspondante (227), dans lequel la génération automatique (105) du script d'exécution comprend une définition (119) d'une pluralité d'interrogations de données (227) pour la pluralité de paramètres et/ou pour des variations de valeurs des paramètres de l'interface de programmation d'application (215) ;
générer automatiquement (107) une infrastructure de test (217), dans lequel l'infrastructure de test (217) comprend au moins une instance cliente (219), et dans lequel l'instance cliente (219) est conçue pour exécuter l'interrogation de données (227) du script d'exécution et pour recevoir des données de réponse correspondantes en provenance du microservice (209, 211, 213) ;
exécuter (109) par l'intermédiaire de l'instance cliente (219) le script d'exécution et envoyer (111) la pluralité d'interrogations de données (227) du script d'exécution à l'interface de programmation d'application (215) du microservice (209, 211, 213) et recevoir (113) par l'intermédiaire de l'instance cliente (219) les données de réponse correspondantes du microservice (209, 211, 213) ; et
déterminer (115) la caractéristique de transmission par l'intermédiaire de l'instance cliente (219).

2. Procédé (100) selon la revendication 1, comprenant en outre l'étape consistant à : générer automatiquement (121) un plan de test, dans lequel une séquence d'envoi de la pluralité d'interrogations de données (227) du script d'exécution est définie dans le plan de test ; et exécuter (123) le script d'exécution et envoyer (125) les interrogations de données (227) du script d'exécution par l'intermédiaire de l'instance cliente (219) à l'interface de programmation d'application (215) du microservice (209, 211, 213) conformément au plan de test.

3. Procédé (100) selon la revendication 2, dans lequel dans le plan de test sont définis en outre une durée d'exécution et/ou un nombre de répétitions d'exécution et/ou une complexité d'exécution et/ou un parallélisme d'exécution et/ou une distance d'exécution des interrogations de données (227), dans lequel une durée d'exécution décrit une durée d'une interrogation de données (227), dans lequel un nombre de répétitions d'exécution décrit un nombre d'exécutions consécutives d'une interrogation de données (227), dans lequel une complexité d'exécution décrit une complexité des paramètres de l'interface de programmation d'application (215) à interroger par l'intermédiaire de l'interrogation de données (227), dans lequel un parallélisme d'exécution décrit un nombre d'interrogations de données (227) à exécuter en parallèle par différentes instances clientes (219), et dans lequel une distance d'exécution décrit une distance spatiale entre l'interface de programmation d'application (215) et les instances clientes (219).

4. Procédé (100) selon l'une quelconque des revendications précédentes, dans lequel la caractéristique de transmission comprend une durée de transmission de données des données de réponse de l'interface de programmation d'application (215) à l'instance cliente (219) et/ou une quantité de données des données de réponse transmises et/ou un succès/échec de l'interrogation de données (227).

5. Procédé (100) selon l'une quelconque des revendications précédentes, dans lequel la génération automatique (107) de l'infrastructure de test (217) comprend une exécution (127) d'au moins un script de génération selon le principe Infrastructure-as-Code (infrastructure en tant que code), et dans lequel une configuration de l'infrastructure de test (217), en particulier une configuration et/ou un nombre des instances clientes (219), est définie dans le script de génération.

6. Procédé (100) selon l'une quelconque des revendications précédentes, dans lequel la génération automatique (105) du script d'exécution sur la base des données d'identification de l'interface de programmation d'application (215) comprend une exécution (129) d'une programmation selon un principe Low-Code (code bas).

7. Procédé (100) selon l'une quelconque des revendications précédentes, dans lequel le procédé est exécuté sur une architecture de serveur (205), en particulier sur un serveur en nuage.

8. Procédé (100) selon l'une quelconque des revendications précédentes, dans lequel l'application microservice (207) est conçue pour commander un processus d'automatisation d'un système d'automatisation (200) ayant au moins un capteur (201) et au moins un actionneur (203), l'application microservice (207) comprenant au moins un premier microservice (209), un deuxième microservice (211) et un troisième microservice (213), dans lequel les premier à troisième microservice (209, 211, 213) sont conçus pour communiquer entre eux au moyen d'interfaces de programmation d'application respectives (215), dans lequel le premier microservice (209) est conçu pour lire les données de capteur du capteur (201), dans lequel le deuxième microservice (211) est conçu pour traiter les données de capteur lues par le premier microservice (209) et pour générer les données de commande correspondantes, et dans lequel le troisième microservice (213) est conçu pour commander l'actionneur (203) sur la base des données de commande du deuxième microservice (211).

9. Produit de programme informatique (300) comprenant des instructions qui, lorsque le programme est exécuté par un ordinateur, l'amènent à exécuter le procédé (100) selon l'une quelconque des revendications précédentes.
